# EUROPEAN PATENT APPLICATION

(11) **EP 0 558 045 A1**
(43) Date of publication of application: **01.09.1993**
(21) Application number: 93103074.6
(22) Date of filing: 26.02.1993
(51) Int. Cl.: C08K 3/04, C08K 9/04, C08L 83/04

(54) **Electrically conductive silicone rubber composition for application to rolls**

(30) Priority: 28.02.1992 JP 79049/92
(71) Applicant: Dow Corning Toray Silicone Company, Limited, Tokyo 103 (JP)
(72) Inventor: Higuchi, Kazuo, Res. and Development Department, Kaigan, Ichihara-shi, Chiba Prefecture (JP); Nakamura, Akito, Res. and Development Department, Kaigan, Ichihara-shi, Chiba Prefecture (JP)
(74) Representative: Spott, Gottfried, Dr.

(57) **Abstract**

The present invention relates to an electrically conductive silicone rubber composition for application to rolls. More specifically, the present invention relates to a conductive silicone rubber composition for roll applications that exhibits little tack prior to its cure and that cures to give a silicone rubber molding that has an excellent processability (grindability, etc.), low surface tack, and narrow range of variation in volume resistivity values.

## Description

The present invention relates to an electrically conductive silicone rubber composition for application to rolls. More specifically, the present invention relates to a conductive silicone rubber composition for roll applications that exhibits little tack prior to its cure and that cures to give a silicone rubber molding that has an excellent processability (grindability, etc.), low surface tack, and narrow range of variation in volume resistivity values.

Silicone rubbers are used as roll coverings in copiers, facsimile machines, printers, etc., due to their excellent stability with respect to the various operating environments, excellent resistance to compression set, and so forth. In the case of the charging rolls, developing rolls, transfer rolls, etc., used in contact developing devices, conductive carbon black-containing silicone rubber compositions are employed that cure to give a low-hardness silicone rubber molding with a volume resistivity in the conduction region of approximately 10⁴ to 10¹⁰ ohm-cm. However, the roll coverings molded from such silicone rubber compositions have an elevated tack. Moreover, it is difficult to obtain a low surface roughness by grinding their surface. As a consequence, these roll coverings are not entirely satisfactory. In other words, roll coverings of this type preferably have a low tack and low surface roughness because these characteristics support inhibition of toner (developer) pick-up by the roll surface and support the development of consistent toner transfer characteristics. However, in order to prepare a conductive carbon black-containing silicone rubber composition that will cure to give a low-hardness silicone rubber molding, the composition must contain only small quantities of reinforcing filler and must develop a low crosslink density. Roll coverings molded from such compositions necessarily have a high tack and also have a poor grindability. In addition, such silicone rubber compositions also have a high tack prior to their cure, and this causes a problematic roll workability during kneading on, for example, a two-roll.

The present invention solves the problems of the prior art by introduction of a conductive silicone rubber composition for roll applications that has a low tack and excellent roll workability prior to its cure and that cures to give a roll covering that exhibits an excellent processability (grindability, etc.), low surface tack, and a narrow range of volume resistivity values.

The present invention relates to an electrically conductive silicone rubber composition for roll applications comprising:
(A) 100 weight parts organopolysiloxane that contains in each molecule at least 2 siloxane units with the following general formula

   R¹ₐR²_{b}SiO_{(4-a-b)/2} ,

   where R¹ represents monovalent hydrocarbon groups lacking aliphatically unsaturated bonds, R² represents alkenyl, a is a number with a value of zero to 2, b is a number with a value of 1 to 2, and a + b = 1.95 to 2.10,
(B) 5 to 100 weight parts surfactant-treated inorganic filler,
(C) 5 to 50 weight parts electrically conductive carbon black,
(D) 15 to 200 weight parts spherical silicone rubber powder whose average particle size is 0.5 to 30 micrometers, and
(E) curing agent in a quantity sufficient to cure the present composition.

To explain the preceding in greater detail, the component (A) used by the present invention comprises organopolysiloxane that contains at least 2 alkenyl groups in each molecule. This is the main or base component of the present invention. The group R¹ in the preceding formula comprises alkyl groups such as methyl, ethyl, and propyl; aryl groups such as phenyl and tolyl; and substituted alkyl groups such as 3,3,3-trifluoropropyl and 3-chloropropyl. The group R² comprises alkenyl groups such as vinyl, allyl, propenyl, and so forth. Finally, a has a value of 0 to 2, b has a value of 1 to 2, and a + b has a value of 1.95 to 2.10. The molecular structure of this component may be straight-chain or branch-containing straight chain. The molecular weight of this component is not specifically restricted, and this component may range from a low-viscosity fluid to a high-viscosity gum.

Component (B) comprises surfactant-treated inorganic filler, and it is this component that functions to stabilize the volume resistivity of the composition of the present invention and provide consistent volume resistivity values. The surfactant in this case comprises known surfactants and is not specifically restricted in scope, but cationic surfactants are preferred. The inorganic filler is exemplified by silica micropowders, e.g., wet-method silica, dry-method silica, etc., diatomaceous earth, alumina, and so forth, and the silica micropowders are preferred. This component can be prepared, for example, (a) by mixing the inorganic filler and surfactant to homogeneity and then heat-treating the mixture or (b) by mixing the inorganic filler with an aqueous solution of the surfactant and then drying off the water fraction. Each 100 weight parts inorganic filler is preferably treated with 0.05 to 10 weight parts surfactant.

The electrically conductive carbon black comprising component (C) is the component that confers conductivity on the composition of the present invention. This component is not particularly restricted, and as a general matter comprises those carbon blacks that have heretofore been used to confer conductivity on silicone rubber compositions. Such carbon blacks are exemplified by acetylene blacks, furnace blacks, thermal blacks, and so forth. Among these, carbon blacks with an oil absorption of 50 to 150 mg/100g are preferred.

Silicone rubber powder comprises the component (D) used in the present invention, and it is this component that characterizes or distinguishes the composition under consideration. This component provides the composition of the present invention with a low tack as well as with processability (grindability, etc.). Even at a high fill ratio, this silicone rubber powder causes a much smaller increase in the hardness of the silicone rubber molding than the conventional inorganic fillers used as fillers for silicone rubber compositions. As a consequence, this component functions to reduce the surface tack of the silicone rubber molding while at the same time improving the rubber processing characteristics, e.g., grindability, roll workability, etc. The particle diameter of this silicone rubber powder should fall within the range of 0.5 to 30 micrometers, and it must have a spherical morphology. This silicone rubber powder can be prepared, for example, by the following methods: (i) curing a liquid addition-reaction-curing silicone rubber composition by spraying it into hot air (refer to Japanese Patent Application Laid Open [Kokai or Unexamined] Numbers Sho 63-17959 {17,959/1988} and Sho 63-77942 {77,942/1988]}; (ii) dispersing a liquid condensation-reaction-curing silicone rubber composition as the discontinuous phase in water or surfactant-containing water, and then removing the water fraction while curing into the silicone rubber by spraying into hot air or by heating (refer to Japanese Patent Application Laid Open Number Sho 63-202658 {202,658/1988}).

As is known, silicone rubber powder can also be prepared by mechanically grinding a silicone rubber cured by some method other than those outlined above. However, the silicone rubber powder afforded by this method has an irregular particle morphology and an average particle diameter generally of at least 100 micrometers. In the case of silicone rubber moldings prepared using this type of silicone rubber powder, the surface tack and surface grindability are not substantially improved, and in fact these characteristics become highly variable or inconsistent.

This component should be added at 15 to 200 weight parts per 100 weight parts component (A) and preferably at 20 to 150 weight parts per 100 weight parts component (A).

The curing agent comprising component (E) is the component that cures the composition of the present invention. This component will generally be an organoperoxide, but the combination of an organohydrogenpolysiloxane and a platinum group metal compound catalyst may also be used. This component should be added in a quantity sufficient to induce curing of the composition of the present invention. In the case of organoperoxides, this will generally be 0.1 to 10 weight parts per 100 weight parts component (A). In the case of the combination of an organohydrogenpolysiloxane and platinum group metal compound catalyst, the organohydrogenpolysiloxane should be used generally at 0.5 to 20 weight parts per 100 weight parts component (A) and the platinum group metal compound catalyst should be used at 0.1 to 100 weight parts for each 1,000,000 weight parts component (A).

The composition of the present invention is readily prepared simply by mixing the above-described components (A) through (E) to homogeneity. Insofar as the object of the present invention is not compromised, the composition of the present invention may contain the various additives known in the art, for example, heat stabilizers, flame retardants, adhesion promoters, and so forth.

The present invention is explained in greater detail below through illustrative examples. In the examples, parts designates weight parts, and the viscosity is the value at 25°C.

Example 1. A mixture (a) was prepared by mixing 6 parts trimethylsiloxy-endblocked methylhydrogenpolysiloxane (viscosity = 10 centipoise (0.01 Pa.s), silicon-bonded hydrogen content = 1.5 weight %) into 100 parts dimethylvinylsiloxy-endblocked dimethylpolysiloxane (viscosity = 500 centipoise (0.5 Pa.s), vinyl content = 0.5 weight %). A mixture (b) was also prepared by mixing 0.6 parts isopropanolic chloroplatinic acid solution (platinum content = 3 weight %) into 100 parts of the same type of dimethylpolysiloxane as described above. The 1 : 1 (weight) mixture of mixtures (a) and (b) was transferred to a colloid mill, and the water-based dispersion of a silicone rubber composition was prepared by the simultaneous addition of ion-exchanged water and surfactant. This silicone rubber composition water-based dispersion was sprayed into a spray drier operating at 200°C. Removal of the water simultaneous with curing of the silicone rubber composition afforded a spherical silicone rubber powder with average particle diameter = 10 micrometers.

A mixture was then prepared from 100 parts water, 10 parts surfactant (stearyltrimethylammonium chloride), and wet-method silica with a BET surface of 130 m²/g. This mixture was dried by spraying into a spray drier operating at 200°C to give a wet-method silica whose surface was treated with surfactant.

A silicone rubber base was prepared by mixing the following to homogeneity in a kneader mixer: 15 parts of the surfactant-treated wet-method silica prepared as above, 25 parts furnace black with an oil absorption of 80 mg/100 g, and 100 parts dimethylpolysiloxane gum (average degree of polymerization = 3,000) composed of 99.84 mole % dimethylsiloxane unit and 0.16 mole% methylvinylsiloxane unit.

The spherical silicone rubber powder prepared as above (quantity reported in Table 1 below) and 1.0 part 2,5-dimethylbis(2,5-tert-butylperoxy)hexane were simultaneously added to 100 parts of the preceding silicone rubber base with mixing to homogeneity on a two-roll. The respective products were conductive silicone rubber compositions 1 - 3 for roll applications.

Each of compositions 1 - 3 was press molded for 10 minutes at 170°C/25 kgf/cm² to give 5 sheet moldings (thickness = 2 mm). In addition, each of compositions 1 - 3 was wrapped onto a stainless steel roll core (diameter = 5 mm), and the respective silicone rubber-covered rolls (diameter = 15 mm) were prepared by vulcanization and bonding for 10 minutes at 170°C.

In each case, the silicone rubber sheets and silicone rubber-covered roll were also held for 4 hours in a hot air-circulation oven maintained at 200°C.

Each silicone rubber-covered roll with diameter = 15 mm was ground to a diameter of 14 mm using a cylindrical grinder. The roughness was measured on the surface of the resulting silicone rubber-covered roll, and these measurement results are reported in Table 2. The volume resistivity was measured on the sheets in order to evaluate the variation in this value, and these measurement results are also reported in Table 2 below.

Comparison Examples 2 and 3. In Comparison Example 2 (composition 4), silicone rubber sheets and a silicone rubber-covered roll were prepared as in Example 1, but in this case using 10 parts of the silicone rubber powder used in Example 1. In Comparison Example 3 (composition 5), silicone rubber sheets and a silicone rubber-covered roll were prepared as in Example 1, but in this case omitting the silicone rubber powder used in Example 1. The properties of the obtained silicone rubber sheets and silicone rubber-covered rolls were measured as in Example 1, and these results are reported in Tables 1 and 2.

**Table 1**

| components | Present invention | | | Comparison examples | |
|---|---|---|---|---|---|
| | composition 1 | composition 2 | composition 3 | composition 4 | composition 5 |
| silicon rubber base (parts) | 140 | 140 | 140 | 140 | 140 |
| silicon rubber powder (parts) | 20 | 50 | 150 | 10 | 0 |

**Table 2**

| measurement values | Present invention | | | Comparison examples | |
|---|---|---|---|---|---|
| | composition 1 | composition 2 | composition 3 | composition 4 | composition 5 |
| range of variation in the volume resistivity values (ohm-cm) | 1 x 10⁷ to 3 x 10⁷ | 1 x 10⁷ to 2 x 10⁷ | 1 x 10⁷ to 2 x 10⁷ | 1 x 10⁷ to 3 x 10⁷ | 1 x 10⁷ to 2 x 10⁷ |
| roughness of the roll surface Rz (micrometers) | 5 | 3 | 3 | 10 | 13 |
| hardness (JIS A) | 38 | 37 | 36 | 38 | 38 |
| tack during 2-roll kneading | + | ++ | ++ | x | xx |
| ++ : no tack observed, roll workability is very good + : minor degree of tack, roll workability is good x : tack present, roll workability is poor xx : substantial tack observed, roll workability is very poor | | | | | |

## Claims

1. An electrically conductive silicone rubber composition for roll applications comprising:
(A) 100 weight parts organopolysiloxane that contains in each molecule at least 2 siloxane units with the following general formula
R¹ₐR²_{b}SiO_{(4-a-b)/2} ,
where R¹ represents monovalent hydrocarbon groups lacking aliphatically unsaturated bonds, R² represents alkenyl, a is a number with a value of zero to 2, b is a number with a value of 1 to 2, and a + b = 1.95 to 2.10,
(B) 5 to 100 weight parts surfactant-treated inorganic filler,
(C) 5 to 50 weight parts electrically conductive carbon black,
(D) 15 to 200 weight parts spherical silicone rubber powder whose average particle size is 0.5 to 30 micrometers, and
(E) curing agent in a quantity sufficient to cure the present composition.

2. An electrically conductive silicone rubber composition for roll applications according to Claim 1, where the surfactant-treated inorganic filler of component (B) comprises silica micropowder that has been treated with cationic surfactant.

3. An electrically conductive silicone rubber composition for roll applications according to Claim 1, where the electrically conductive carbon black of component (C) has an oil absorption within a range of about 50 to 150 mg/100g.

4. An electrically conductive silicone rubber composition for roll applications according to Claim 1, where the spherical silicone rubber powder of component (D) is added at 20 to 150 weight parts per 100 weight parts of the component (A).

5. An electrically conductive silicone rubber composition for roll application according to Claim 1, where the curing agent of component (E) is an organoperoxide.

6. An electrically conductive silicone rubber composition for roll application according to Claim 5, where the organoperoxide is present at 0.1 to 10 weight parts per 100 parts of the component (A).

7. An electrically conductive silicone rubber composition for roll application according to Claim 1, where the curing agent of component (E) is a combination of an organohydrogenpolysiloxane and a platinum group metal compound catalyst.

8. An electrically conductive silicone rubber composition for roll application according to Claim 7, where the organohydrogenpolysiloxane is present at 0.5 to 20 weight parts per 100 weight parts of the component (A) and the platinum group metal compound catalyst is present at 0.1 to 100 weight parts per 1,000,000 weight parts of the component (A).

9. An electrically conductive silicone rubber composition for roll application according to Claim 8, where the platinum group metal compound catalyst is isopropanolic chloroplatinic acid.
